# EUROPEAN PATENT SPECIFICATION

(11) **EP 2 851 571 B1**
(45) Date of publication and mention of the grant of the patent: **24.04.2019**
(21) Application number: 14184660.0
(22) Date of filing: 12.09.2014
(51) Int. Cl.: F16B 45/02

(54) **Carabiner with key-lock system**
Karabiner mit Führungsnasensystem
Mousqueton avec un système de traîne de guidage

(30) Priority: 19.09.2013 IT MI20131544
(43) Date of publication of application: 25.03.2015
(73) Proprietor: Camp S.p.A., 23834 Premana (Lecco) (IT)
(72) Inventor: Codega, Antonio, 23834 Premana (Lecco) (IT); Gai, Luca, 23834 Premana (Lecco) (IT)
(74) Representative: Croce, Valeria

(56) References cited:
- EP-A1- 0 822 348
- EP-A2- 2 196 687

## Description

The present invention relates to a carabiner, in particular with a carabiner with closing system of the type called "key-lock", for mountaineering and climbing. Examples of carabiners are known from EP 2 196 687 A2 and EP 0 822 348 A1.

There are various types of carabiners for mountaineering and climbing. A first type are carabiners with ring nut, usable in particular for hooking the harness. Then, there are lever or wire carabiners which are normally used for quick draws. In all cases, the carabiners must be resistant to the opening, both accidental and when the carabiner is under load, such as occurs in case of fall. In fact, when the carabiner is under load, it tends to get deformed in space according to complex directions, with the risk of creating a non-optimal coupling between the mobile end of the closing element and the point of contact thereof with the coupling portion of the ring.

In order to obviate this drawback, carabiners are used which comprise a sort of hook that engages the end of the lever. While this solution is able to increase the safety of the climber, the hook can hinder the slipping of the rope, engaging therewith and therefore making the extraction from the carabiner difficult during some phases of the climb.

The so-called "key-lock" fixing system was then proposed, which consists in shaping the end of the coupling ring as a T according to a cross section with respect to the plane in which the carabiner lies. The lever will consequently have a coupling head of complementary shape, so as to achieve a shape coupling. This fastening system prevents the hook effect of conventional lever carabiners and ensures an acceptable level of safety against accidental opening, even if the risk of opening is still not averted.

The problem that underlies the present invention is to provide a carabiner of the lever type, in particular of the type provided with a "key-lock" system, which further improves the resistance to opening when the carabiner is under load.

This problem is solved by a carabiner as outlined in the appended claims, the definitions of which are an integral part of the present invention.

Further features and advantages of the present invention will appear more clearly from the description of a preferred embodiment thereof, made hereafter by way of a non-limiting example only with reference to the following figures, in which:
Figure 1 shows a plan view of the carabiner of the invention;
Figure 2A shows a sectional view of a detail of the carabiner in figure 1;
Figure 2B shows a sectional view of the detail in figure 2A under load;
Figure 3 shows a perspective view of the detail in figure 2A;
Figure 4 shows a sectional view of a detail of the carabiner of the invention according to a different embodiment.

With reference to the figures, the carabiner according to the invention, indicated as a whole with reference numeral 1, comprises a ring 2 having a first side 3 interrupted by an opening delimited by a first and a second end 10, 12. The opening is closed by a spring closing element 4 which can take an open position to allow the introduction in the carabiner 1 of a rope or a ring of a different device, and a closed position, wherein the closing element 4 closes ring 2 of the carabiner, preventing the escape of said rope or ring of the different device.

In one embodiment, ring 2 has a first and a second side 3, 5 converging and connected by a first and a second loop 6, 7, wherein the first loop 6 has a smaller radius of curvature than the second loop 7.

The first end 10 of the ring 2 comprises a coupling portion 13. The coupling portion 13 is bulb-shaped with the projecting part in a direction transverse to the plane of the carabiner 1. In this way, a hook effect for the rope passing through the carabiner is prevented.

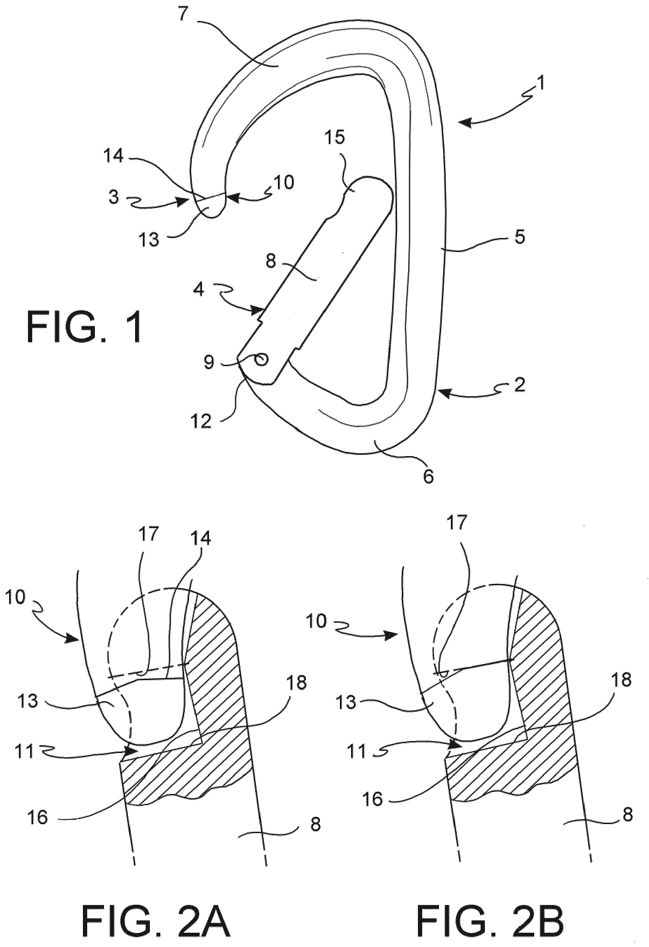

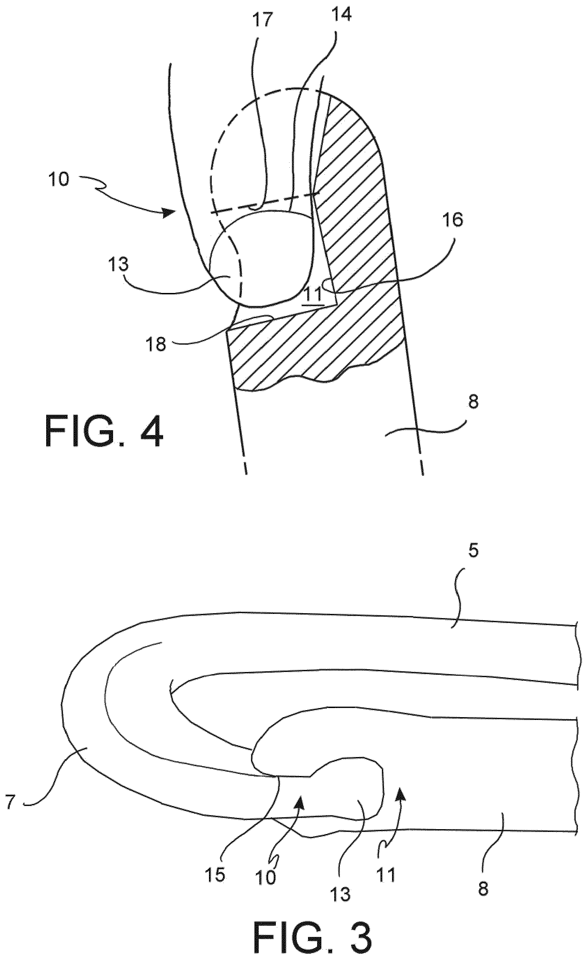

The bulb-shaped coupling portion 13 therefore includes on both sides of the bulb a shoulder 14 having an uneven surface. In particular, in the embodiment in figures 1, 2A and 2B, the surface of the shoulder 14 is convex with a broken line profile, while in the embodiment in figure 4 it is convex with a continuous line profile.

The closing element 4 comprises a tubular body 8, the development of which in length is greater than the extension of the opening of the first side 3. The tubular body 8 is hinged by a hinge 9 at the second end 12 of the first side 3 and has, at the opposite end 10, a seat 11 having such a shape and size as to allow the introduction of the coupling portion 13 of the first end 10 of the side 3 and the stop thereof in abutment inside said seat 11.

As shown in the figures, the seat 11 comprises a vertical groove 15 for the introduction of the first end 10, a lateral abutment surface 16, an upper stop surface 17 and a lower surface 18. The distance between the lower surface 18 and the upper stop surface 17 is greater than the dimensions of the coupling portion 13 of the end 10 of the ring 2, in such a way that, under normal conditions, the shoulder 14 is not in contact with the upper stop surface 17 (figure 2A).

However, according to the extent of the load applied to the carabiner 1, complex deformations in space of the same occur, consisting of translations and rotations of the ring 2 and of the closing element 4.

For this reason, the surfaces that come into contact between the shoulder 14 and the closing element 4 do not remain constant in time, but vary in size and location as a function of the applied load.

With the type of geometries involved, the uneven surface, in particular the convex surface, of the shoulder 14 allows maintaining a stable coupling following the deformation of ring 2 as a "knee effect" coupling occurs between the closing element 4 and the coupling portion 13 of the ring 2.

Therefore, thanks to the convex shape, either broken or continuous, of the surface of the shoulder 14, a stable and resistant coupling is always obtained which prevents the accidental opening of the closing element 4 which can instead happen with the carabiners with "key-lock" system of the prior art.

In the latter, in fact, the surface of the shoulder 14 is substantially flat (straight profile) and must be in condition of parallelism with the surface of the closing element 4 to ensure an optimal coupling; this hardly occurs, irrespective of the applied loads. It is therefore a coupling sensitive to deformations and without the necessary precautions, there can be an accidental opening of the closing element 4.

The carabiner according to the invention therefore achieves the intended object of significantly improving the safety for the user.

The carabiner of the invention is of simple construction, lightweight and cost-effective.

It is clear that the above description is only a particular embodiment of the present invention, and those skilled in the art will be able to make all those modifications necessary for its adaptation to particular conditions, without thereby departing from the protection scope claimed.

## Claims

1. Carabiner (1) comprising a ring (2) having a side (3), interrupted by an opening delimited by a first and a second end (10, 12), wherein said opening is closed by a spring closing element (4) which can take an open position and a closed position, wherein the first end (10) of the ring (2) is a bulb-shaped coupling portion (13), with a projecting part in a direction transverse to the plane of the carabiner (1), **characterised in that** said bulb-shaped coupling portion (13) on both sides of the bulb forms a shoulder (14) having an uneven surface, wherein the surface of the shoulder (14) is convex with a broken line or continuous line profile.

2. Carabiner (1) according to claim 1, wherein the closing element (4) comprises a tubular body (8) comprising a seat (11) having such a shape and size as to allow the introduction of the coupling portion (13) of the first end (10) of the side (3) of the ring (2) and its stop in abutment inside said seat (11).

3. Carabiner (1) according to claim 2, wherein the seat (11) comprises a vertical groove (15) for the introduction of said first end (10) of the side (3) of the ring (2), a lateral abutment surface (16) for the coupling portion (13), an upper stop surface (17) for the shoulder (14) and a lower surface (18).

4. Carabiner (1) according to claim 3, wherein the distance between the lower surface (18) and the upper stop surface (17) is greater than the dimensions of the coupling portion (13), in such a way that, when the carabiner is not under load, the shoulder (14) is not in contact with the upper stop surface (17).

## Patentansprüche

1. Karabiner (1), der einen Ring (2) aufweist, dessen eine Seite (3 von einer Öffnung unterbrochen ist, die durch ein erstes und ein zweites Ende (10, 12) begrenzt ist, wobei die Öffnung durch ein Federverschlusselement (4) verschlossen ist, das eine offene Position und eine geschlossene Position einnehmen kann, wobei das erste Ende (10) des Rings (2) ein wulstförmiger Kupplungsabschnitt (13) mit einem in Richtung quer zur Ebene des Karabiners (1) vorstehenden Teil ist, **dadurch gekennzeichnet, dass** der wulstförmige Kupplungsabschnitt (13) an beiden Seiten des Wulsts eine Schulter (14) mit einer unebenen Fläche bildet, wobei die Oberfläche der Schulter (14) konvex mit einem unterbrochenen Linien- oder durchgehenden Linienprofil ist.

2. Karabiner (1) nach Anspruch 1, wobei das Verschlusselement (4) einen rohrförmigen Körper (8) aufweist, der einen Sitz (11) mit einer solchen Form und Größe aufweist, um das Einführen des Kupplungsabschnitts (13) des ersten Endes (10) der Seite (3) des Rings (2) und dessen Stopp in Anlage innerhalb des Sitzes (11) zu erlauben.

3. Karabiner (1) nach Anspruch 2, wobei der Sitz (11) eine vertikale Nut (15) für das Einführen des ersten Endes (10) der Seite (3) des Rings (2), eine seitliche Anlagefläche (16) für den Kupplungsabschnitt (13), eine obere Stoppfläche (17) für die Schulter (14) und eine untere Fläche (18) aufweist.

4. Karabiner (1) nach Anspruch 3, wobei der Abstand zwischen der unteren Fläche (18) und der oberen Stoppfläche (17) größer ist als die Dimensionen des Kupplungsabschnitts (13), derart, dass dann, wenn der Karabiner nicht belastet ist, die Schulter (14) die obere Stoppfläche (17) nicht kontaktiert.

## Revendications

1. Mousqueton (1) comprenant un anneau (2) ayant un côté (3), interrompu par une ouverture délimitée par une première et une seconde extrémité (10, 12), dans lequel ladite ouverture est fermée par un élément de fermeture à ressort (4) qui peut prendre une position ouverte et une position fermée, dans lequel la première extrémité (10) de l'anneau (2) est une partie d'accouplement en forme de bulbe (13), ayant une partie en saillie dans une direction transversale au plan du mousqueton (1), **caractérisé en ce que** ladite partie d'accouplement en forme de bulbe (13) sur les deux côtés du bulbe forme un épaulement (14) ayant une surface irrégulière, dans lequel la surface de l'épaulement (14) est convexe avec un profil à ligne discontinue ou à ligne continue.

2. Mousqueton (1) selon la revendication 1, dans lequel l'élément de fermeture (4) comprend un corps tubulaire (8) comprenant un logement (11) ayant une forme et une taille telles qu'elles permettent l'introduction de la partie d'accouplement (13) de la première extrémité (10) du côté (3) de l'anneau (2) et son arrêt en butée à l'intérieur dudit logement (11).

3. Mousqueton (1) selon la revendication 2, dans lequel le logement (11) comprend une rainure verticale (15) pour l'introduction de ladite première extrémité (10) du côté (3) de l'anneau (2), une surface de butée latérale (16) pour la partie d'accouplement (13), une surface d'arrêt supérieure (17) pour l'épaulement (14) et une surface inférieure (18).

4. Mousqueton (1) selon la revendication 3, dans lequel la distance entre la surface inférieure (18) et la surface d'arrêt supérieure (17) est supérieure aux dimensions de la partie de couplage (13), d'une manière telle que, lorsque le mousqueton n'est pas soumis à une charge, l'épaulement (14) n'est pas en contact avec la surface d'arrêt supérieure (17).
